(19) Europäisches Patentamt
European Patent Office
Office européen des brevets

(11) EP 4 542 677 A1

(12) **EUROPEAN PATENT APPLICATION**
published in accordance with Art. 153(4) EPC

(43) Date of publication:
23.04.2025 Bulletin 2025/17

(51) International Patent Classification (IPC):
$H01M\ 4/1393^{(2010.01)}$   $H01M\ 4/583^{(2010.01)}$

(21) Application number: 22947252.7

(52) Cooperative Patent Classification (CPC):
H01M 4/1393; H01M 4/583; Y02E 60/10

(22) Date of filing: 22.06.2022

(86) International application number:
PCT/CN2022/100320

(87) International publication number:
WO 2023/245473 (28.12.2023 Gazette 2023/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Ningde Amperex Technology Limited
Ningde, Fujian 352100 (CN)

(72) Inventors:
• ZHENG, Zigui
  Ningde, Fujian 352100 (CN)
• YI, Zheng
  Ningde, Fujian 352100 (CN)
• XIE, Yuansen
  Ningde, Fujian 352100 (CN)

(74) Representative: Icosa
83 avenue Denfert-Rochereau
75014 Paris (FR)

(54) **NEGATIVE ELECTRODE SHEET AND ELECTROCHEMICAL DEVICE**

(57)    This application discloses a negative electrode plate and an electrochemical device. The face-to-face contact in the lamellar hard carbon active material in the negative electrode plate replaces the point-to-point contact in the hard carbon active material of conventional morphology, thereby effectively reducing the internal resistance of the negative active material layer, and effectively increasing the compacted density of the negative active material layer and reducing the porosity, and in turn, increasing the energy density of the lithium-ion battery. More excellent kinetics are available for diffusing lithium ions in the lamellar hard carbon negative active material, thereby improving the fast charge capability of the lithium-ion battery. In addition, the low-expansion hard carbon active material endows the lithium-ion battery with higher cycle performance. Moreover, the preparation method in this application is simple, easy to operate and control, cost-effective, and suitable for industrial production.

FIG. 1

EP 4 542 677 A1

**Description**

**TECHNICAL FIELD**

This application relates to the technical field of secondary batteries, and in particular, to a negative electrode plate and an electrochemical device.

**BACKGROUND**

Electrochemical devices such as a lithium-ion battery are distinctly characterized by a high energy density, a long cycle life, no pollution, no memory effect, and the like. As clean energy, the electrochemical devices have been progressively applied to a wide range of fields from electronic products to large-sized devices such as an electric vehicle to meet the strategy of sustainable development of the environment and energy. This imposes higher requirements on the energy density of the electrochemical devices.

Currently, graphite is still a main negative electrode material of commercially available lithium-ion batteries. Graphite exhibits advantages such as a high electrical conductivity and high stability. However, graphite not only incurs a low theoretical specific capacity and poor kinetics, but also incurs a high rate of volume expansion in the case of fast charge and discharge. Therefore, graphite as a negative electrode material can hardly further improve the energy density and cycle life of electrochemical devices, but may bring safety hazards to electrochemical devices.

**SUMMARY**

In view of the above problems in the prior art, this application provides a negative electrode plate. The negative electrode plate possesses a high compacted density, and endows the electrochemical device with a high energy density, a long cycle life, and excellent C-rate performance and fast-charge performance.

A first aspect of this application provides a negative electrode plate. The negative electrode plate includes a negative current collector and a negative active material layer disposed on at least one side of the negative current collector. The negative active material layer includes a negative active material. The negative active material includes hard carbon particles and graphite particles. The hard carbon particles have a lamellar structure. Based on a quantity of the hard carbon particles, the hard carbon particles with an aspect ratio of 3 to 7 accounts for a%, satisfying: $30 \leq a \leq 70$. The negative active material layer containing the hard carbon particles of a specified aspect ratio can achieve a higher compacted density after being cold-pressed, can effectively shorten the transmission path of active ions, and increase the solid phase transfer speed of active ions inside the negative active material, thereby reducing the internal resistance of the electrochemical device, and improving the kinetic performance, cycle performance, C-rate performance, and fast-charge performance of the electrochemical device.

In some embodiments, $30 \leq a \leq 50$. When the proportion of the hard carbon particles with an aspect ratio of 3 to 7 falls within this range, the electrochemical device achieves higher cycle performance, C-rate performance, and fast-charge performance.

In any embodiment of this application, based on the quantity of the hard carbon particles, the hard carbon particles with an aspect ratio of 2 to 3 account for b%, satisfying: $20 \leq b \leq 60$. When falling within the above range, the proportion of the hard carbon particles with an aspect ratio of 2 to 3 can endow the negative active material layer of the negative electrode plate with a high compacted density and an appropriate porosity, increase the energy density of the electrochemical device, and improve the cycle performance, C-rate performance, and fast-charge performance of the electrochemical device.

In some embodiments, $20 \leq b \leq 50$, when the proportion of the hard carbon particles with an aspect ratio of 2 to 3 falls within this range, the electrochemical device achieves higher cycle performance, C-rate performance, and fast-charge performance.

In any embodiment of this application, the hard carbon particles satisfy: $a + b \geq 90$. When falling within the above ranges, the proportion of hard carbon particles with an aspect ratio of 2 to 3 and the proportion of hard carbon particles with an aspect ratio of 3 to 7 in the hard carbon can endow the electrochemical device with a high energy density, a long cycle life, and excellent fast-charge performance.

In some embodiments, based on the quantity of the hard carbon particles, the hard carbon particles with an aspect ratio of 3 to 7 account for a%, and the hard carbon particles with an aspect ratio of 2 to 3 account for b%, satisfying: $a + b \geq 95$, thereby further enhancing the high energy density, long cycle life, and excellent fast-charge performance of the electrochemical device.

In any embodiment of this application, based on the quantity of the hard carbon particles, the hard carbon particles with an aspect ratio of 1 to 2 account for c%, and the hard carbon particles with an aspect ratio greater than 7 account for d%, satisfying: $0.1 \leq c \leq 10$, and $0.1 \leq d \leq 1$. When falling within the above ranges, the proportion of the hard carbon particles with an aspect ratio of 1 to 2 and the proportion of the hard carbon particles with an aspect ratio greater than 7 can endow the negative active material layer with a high compacted density and a high porosity, reduce the first-cycle irreversible capacity, and improve the cycle performance, C-rate performance, and fast-charge performance of the electrochemical device.

In any embodiment of this application, based on the quantity of the hard carbon particles, the hard carbon particles with an aspect ratio of 2 to 3 account for b%, the hard carbon particles with an aspect ratio of 1 to 2 account for c%, and the hard carbon particles with an aspect ratio greater than 7 account for d%, satisfying: a + b + c + d = 100. When falling within the above range, the aspect ratio of the hard carbon can more sufficiently ensure that the hard carbon achieves a high compacted density and an appropriate specific surface area. In this way, the negative active material layer of the negative electrode plate is endowed with a high compacted density and an appropriate porosity, and the electrochemical device achieves a higher energy density. In addition, the transmission path of lithium ions in the negative electrode plate is shortened, the fast-charge performance of the electrochemical device is improved, the internal resistance of the electrochemical device is reduced, the first-cycle irreversible capacity of the electrochemical device is reduced, and the cycle life of the electrochemical device is prolonged.

In any embodiment of this application, the mass of the hard carbon particles accounts for 85% to 99% of the mass of the negative active material. When the mass of the hard carbon particles falls within the above range, the hard carbon particles can further improve the compacted density of the negative active material layer, and endow the electrochemical device with a relatively high energy density.

In any embodiment of this application, an X-ray diffraction pattern of the negative active material includes a first diffraction peak and a second diffraction peak. The first diffraction peak is located between 18° and 30°, and a full-width-at-half-maximum of the first diffraction peak is 4° to 12°. A second diffraction peak is located between 26° and 27°, and a full-width-at-half-maximum of the second diffraction peak is 0.1° to 0.4°.

In any embodiment of this application, the hard carbon particles include micropores. A volume of the micropores measured by a nitrogen and carbon dioxide adsorption-desorption method is greater than or equal to 0.25 cc/g. The hard carbon active material contains a larger micropore volume, indicating that the material achieves a higher lithium storage capacity, thereby increasing the capacity of the negative active material and increasing the energy density of the electrochemical device.

In any embodiment of this application, a particle size of the negative active material satisfies $1\,\mu m \leq D_{v10} \leq 5\,\mu m$, $4\,\mu m \leq D_{v50} \leq 18\,\mu m$, and $D_{v99} \leq 43\,\mu m$. The particle size of the negative active material falls within the above appropriate range, and the combination of active materials of different particle sizes makes the active material layer stacked more compactly after cold pressing, thereby achieving a higher compacted density and further improving the energy density and cycle performance of the electrochemical device.

In any embodiment of this application, a specific surface area of the negative active material is 1 m²/g to 30 m²/g. When the specific surface area of the negative active material falls within the above appropriate range, the specific surface area of the negative active material particles is made to be appropriate, and the area of the SEI film formed on the surface of the negative electrode plate is made to be appropriate, thereby reducing the consumption of irreversible lithium in the first-cycle charging process, and endowing the electrochemical device with both good kinetic performance and a high energy density.

In any embodiment of this application, the compacted density of the negative active material layer is 1.0 g/cm³ to 1.7 g/cm³. The negative active material layer of this application includes hard carbon particles of an appropriate aspect ratio. Therefore, the negative active material particles in the negative active material layer are stacked more compactly, thereby achieving a high compacted density, increasing the content of the negative active material per unit volume, and in turn, increasing the energy density of the electrochemical device.

In any embodiment of this application, the porosity of the negative active material layer is 10% to 40%. More face-to-face contact exists between the particles of the lamellar hard carbon active material. The more compact stacking makes the porosity of the negative active material layer lower. The porosity of the negative active material layer falls within the above appropriate range, thereby not only reducing the internal resistance of the negative electrode plate, but also ensuring high wettability of the negative electrode plate by the electrolyte solution, and in turn, improving the kinetic performance of the electrochemical device.

A second aspect of this application provides an electrochemical device. The electrochemical device includes the negative electrode plate disclosed in the first aspect.

In this application, hard carbon particles and graphite particles are added into the negative active material. The hard carbon particles have a lamellar structure. The proportion of the hard carbon particles with an aspect ratio of 3 to 7 is controlled to fall within the specified range, thereby effectively shortening the transmission path of active ions, increasing the solid phase transfer speed of active ions inside the negative active material, reducing the internal resistance of the electrochemical device, making the negative active material layer achieve a higher compacted density after being cold-pressed, and improving the kinetic performance, cycle performance, C-rate performance, and fast-charge performance of the electrochemical device.

## BRIEF DESCRIPTION OF DRAWINGS

To describe the technical solutions of some embodiments of this application more clearly, the following outlines the drawings to be used in some embodiments of this application. Evidently, the drawings outlined below merely illustrate a part of embodiments of this application.

FIG. 1 is a cross-sectional schematic view of a negative electrode plate according to an embodiment of this application;

FIG. 2 is a scanning electron microscope (SEM) image of a cross-section of negative active material particles according to an embodiment of this application; and

FIG. 3 is a pore size distribution diagram of hard carbon particles in a negative active material according to Embodiment 1 of this application.

## DETAILED DESCRIPTION

To make the objectives, technical solutions, and beneficial effects of this application clearer, the following describes this application in further detail with reference to embodiments. Understandably, the embodiments described in this specification are merely intended for interpreting this application but not intended to limit this application.

For brevity, just some of numerical ranges are expressly disclosed herein. However, any lower limit may be combined with any upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. Therefore, each point or each single numerical value may be used as a lower limit or upper limit of the range to combine with any other point or other single numerical value or with any other lower or upper limit to form an unspecified range.

It is hereby noted that in the description herein, unless otherwise specified, a range defined by a numerical value qualified by "at least" or "at most" includes this numerical value, and the word "more" in the phrase "one or more of" means at least two.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The above summary of this application is not intended to describe every disclosed embodiment or every implementation of this application. The following description exemplifies illustrative embodiments in more detail. In several places throughout this application, guidance is provided through a series of embodiments. The embodiments may be used in various combinations. In each instance, an enumerated list serves merely as a representative list, but is not to be construed as an exclusive list.

The hard carbon is of relatively high hardness. Cold-pressing the hard carbon can hardly increase the compacted density, but may damage a negative current collector, thereby increasing the risk of the detachment of the negative active material layer, and ultimately leading to a sharp increase in the internal resistance of the electrochemical device and a sharp decrease in the capacity retention rate. During the transportation or use of the electrochemical device, the uncompacted hard carbon particles are also very prone to damage the separator, thereby resulting in an increase in the voltage drop of the electrochemical device per unit time. Therefore, the direct application of the hard carbon material to the electrochemical device not only exerts a very limited effect on the increase of the energy density of the electrochemical device, but also causes an adverse effect onto the cycle performance, capacity retention rate, and safety performance of the electrochemical device.

## Negative electrode plate

This application discloses a negative electrode plate. The negative electrode plate includes a negative current collector and a negative active material layer disposed on at least one side of the negative current collector. The negative active material layer includes a negative active material. The negative active material includes hard carbon particles and graphite particles. The hard carbon particles have a lamellar structure. Based on a quantity of the hard carbon particles, the hard carbon particles with an aspect ratio of 3 to 7 accounts for a%, satisfying: $30 \leq a \leq 70$.

The aspect ratio of the hard carbon particles can represent a ratio of a major diameter to a thickness of the hard carbon particles. The major diameter is a longest diameter of a hard carbon particle on a projection plane of a cross-section of the hard carbon particle. The thickness is a maximum thickness of the hard carbon particle in a direction perpendicular to the major diameter in the cross-section of the hard carbon particle.

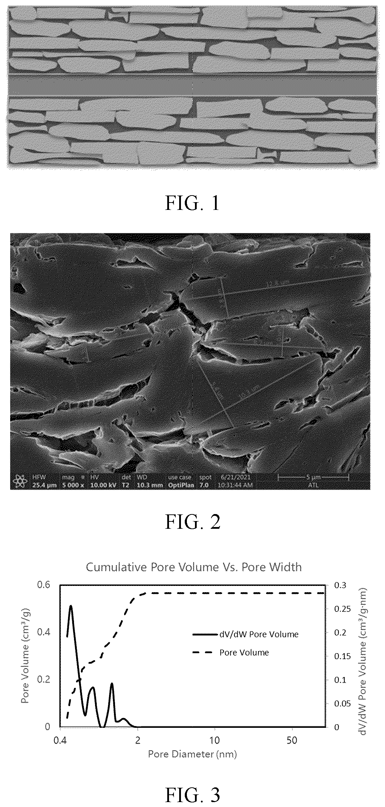

Without intending to be limited by any theory or explanation, the applicant hereof unexpectedly discovers that, relative to microspherical hard carbon particles and irregularly shaped hard carbon particles, the active material layer containing the hard carbon particles with a specified aspect ratio can achieve a higher compacted density after being cold-pressed. The high aspect ratio of the hard carbon particles means that the hard carbon particles of the same volume can have a thinner lamellar structure. Therefore, as shown in FIG. 1, the hard carbon particles can be arranged in layers, and can achieve a high compacted density after being cold-pressed. Through face-to-face contact, the lamellar hard carbon particles can effectively shorten the transmission path of lithium ions and increase the solid-phase transfer speed of the lithium ions inside the active material, thereby reducing the internal resistance of the lithium-ion battery, improving the kinetic performance of the battery, and improving the cycle performance, C-rate performance, and fast-charge performance of the electrochemical device.

In some embodiments, a may be 70, 65, 60, 55, 50, 45, 40, 35, 30, or a value falling within a range formed by any two thereof.

In some embodiments, $30 \leq a \leq 50$. When the proportion of the hard carbon particles with an aspect ratio of 3 to 7 falls within this range, the electrochemical device achieves higher cycle performance, C-rate performance, and fast-charge performance.

In some embodiments, based on the quantity of the hard carbon particles, the hard carbon particles with an aspect ratio of 2 to 3 account for b%, satisfying: $20 \leq b \leq 60$. For example, b may be 20, 25, 30, 35, 40, 45, 50, 55, 60, or a value falling within a range formed by any two thereof.

Without intending to be limited by any theory or explanation, when the proportion of the hard carbon particles with an aspect ratio of 2 to 3 falls within the above range, the hard carbon particles can ensure an appropriate specific surface area of the hard carbon particles while ensuring that the hard carbon particles achieve a high compacted density after being cold-pressed. Therefore, when applied to a negative electrode plate, such a hard carbon material endows the negative active material layer of the negative electrode plate with a high compacted density and an appropriate porosity, and improves the cycle performance, C-rate performance, and fast-charge performance of the electrochemical device.

In some embodiments, $20 \leq b \leq 50$, when the proportion of the hard carbon particles with an aspect ratio of 2 to 3 falls within this range, the electrochemical device achieves higher cycle performance, C-rate performance, and fast-charge performance.

In some embodiments, based on the quantity of the hard carbon particles, the hard carbon particles with an aspect ratio of 3 to 7 account for a%, and the hard carbon particles with an aspect ratio of 2 to 3 account for b%, satisfying: $a + b \geq 90$. When the proportion of the hard carbon particles with an aspect ratio of 2 to 3 and the proportion of the hard carbon particles with an aspect ratio of 3 to 7 in the hard carbon fall within the above ranges, the area of the SEI film formed on the surface of the negative electrode plate can be made to be appropriate while increasing the compacted density of the negative active material layer. Therefore, when applied to an electrochemical device, the negative electrode plate of this application endows the electrochemical device with a high energy density, a long cycle life, and excellent fast-charge performance.

In some embodiments, based on the quantity of the hard carbon particles, the hard carbon particles with an aspect ratio of 3 to 7 account for a%, and the hard carbon particles with an aspect ratio of 2 to 3 account for b%, satisfying: $a + b \geq 95$, thereby further improving the cycle performance, C-rate performance, and fast-charge performance of the electrochemical device.

In some embodiments, based on the quantity of the hard carbon particles, the hard carbon particles with an aspect ratio of 1 to 2 account for c%, and the hard carbon particles with an aspect ratio greater than 7 account for d%, satisfying: $0.1 \leq c \leq 10$, and $0.1 \leq d \leq 1$.

The aspect ratio of the hard carbon particles of conventional morphology is mainly distributed in a range of 1 to 2. The rigidity of hard carbon materials is relatively high, and most of the contacts between particles are point-to-point contacts, thereby making it difficult to compactly stack the particles during the cold-pressing, leaving a relatively high porosity, and reducing the energy density of the electrochemical device. When the aspect ratio of the hard carbon particles is overly high, the specific surface area of the hard carbon particles increases accordingly, and the area of the SEI film formed on the surface of the negative electrode plate also increases accordingly, thereby leading to an increase in the first-cycle irreversible capacity. Therefore, the proportion of the particles with a low aspect ratio and particles of an overly high aspect ratio in the hard carbon active materials needs to be minimized. Without intending to be limited by any theory or explanation, when the proportion of the hard carbon particles with an aspect ratio of 1 to 2 and the proportion of the hard carbon particles with an aspect ratio greater than 7 fall within the above appropriate ranges, the negative active material layer can be endowed with a high compacted density and a high porosity, and the first-cycle irreversible capacity can be reduced.

In some embodiments, based on the quantity of the hard carbon particles, the hard carbon particles with an aspect ratio of 3 to 7 account for a%, the hard carbon particles with an aspect ratio of 2 to 3 account for b%, the hard carbon particles with an aspect ratio of 1 to 2 account for c%, and the hard carbon particles with an aspect ratio greater than 7 account for d%, satisfying: $0.1 \leq c \leq 10$, $0.1 \leq d \leq 1$, and $a + b + c + d = 100$.

When falling within the above range, the aspect ratio of the hard carbon can more sufficiently ensure that the hard carbon achieves a high compacted density and an appropriate specific surface area. In this way, the negative active material layer of the negative electrode plate is endowed with a high compacted density and an appropriate porosity. The negative electrode plate with a high compacted density not only endows the electrochemical device with a higher energy density, but also shortens the transmission path of lithium ions in the negative electrode plate, thereby improving the fast-charge performance of the electrochemical device, and reducing the internal resistance of the electrochemical device. With an appropriate porosity of the negative electrode plate, the area of the SEI film formed on the surface of the negative electrode plate is made appropriate, thereby reducing the first-cycle irreversible capacity of the electrochemical device. Therefore, when applied to an electrochemical device, the negative electrode plate can significantly increase the energy density of the electrochemical device, prolong the cycle life of the electrochemical device, and endow the electrochemical device with excellent fast-charge performance.

In some embodiments, a hard carbon particle includes micropores. The pore size of the micropore is less than 2 nm. The volume of the micropores measured by a carbon dioxide adsorption-desorption method is greater than or equal to 0.25 cc/g. In some embodiments, the volume of micropores of the hard carbon particles measured by a carbon dioxide adsorption-desorption method is 1 cc/g to 5 cc/g. In this case, the hard carbon active material contains a larger micropore volume, indicating, to some extent, that the material achieves a higher lithium storage capacity, thereby increasing the capacity of the negative active material and increasing the energy density of the electrochemical device.

In some embodiments, the mass of the hard carbon particles accounts for 85% to 99% of the mass of the negative active material, and the mass of the graphite particles accounts for 1% to 15% of the mass of the negative active material. The negative active material includes 95 wt% hard carbon particles and 5 wt% graphite particles. The applicant finds that, by doping the negative active material with a small amount of graphite, the amount of the doping graphite falls within the above appropriate range, the negative active material can further increase the compacted density of the negative active material layer, thereby endowing the electrochemical device with a relatively high energy density. Specifically, graphite is a stacked structure of graphene sheets. After the graphite is mixed with hard carbon, the hard carbon may slip with the help of graphite sheets during cold pressing. In this way, the lamellar hard carbon particles can be stacked together in a more regular orientation, thereby further increasing the compacted density of the negative active material layer and improving the energy density of the electrochemical device.

In some embodiments, an X-ray diffraction (XRD) pattern of the negative active material may include a first diffraction peak and a second diffraction peak. The first diffraction peak is located between 18° and 30°, and a full-width-at-half-maximum of the first diffraction peak is 4° to 12°. The second diffraction peak is located between 26° and 27°, and a full-width-at-half-maximum of the second diffraction peak is 0.1° to 0.4°. When the XRD pattern of the negative active material meets the above conditions, it is ensured that the negative active material possesses an appropriate carbon microcrystal structure and appropriate constituents.

In some embodiments, the graphite particles include natural graphite particles, artificial graphite particles, or a combination thereof.

Optionally, the artificial graphite particles may include mesocarbon microbead (MCMB)-based artificial graphite particles, petroleum coke-based artificial graphite particles, or a combination thereof.

In some embodiments, the particle size of the negative active material may satisfy $1~\mu m \leq D_{v10} \leq 5~\mu m$, $4~\mu m \leq D_{v50} \leq 18~\mu m$, and $D_{v99} \leq 43~\mu m$. For example, $D_{v10}$ may be $1~\mu m$, $1.5~\mu m$, $2~\mu m$, $2.5~\mu m$, $3~\mu m$, $3.5~\mu m$, $4~\mu m$, $4.5~\mu m$, $5~\mu m$, or a value falling within a range formed by any two thereof. $D_{v50}$ may be $4~\mu m$, $6~\mu m$, $8~\mu m$, $10~\mu m$, $12~\mu m$, $14~\mu m$, $16~\mu m$, $18~\mu m$, or a value falling within a range formed by any two thereof. $D_{v99}$ may be less than or equal to $43~\mu m$, less than or equal to $40~\mu m$, less than or equal to $38~\mu m$, less than or equal to $35~\mu m$, less than or equal to $32~\mu m$, or less than or equal to $30~\mu m$. The particle size of the negative active material falls within the above appropriate range, and the combination of active materials of different particle sizes makes the active material layer stacked more compactly after cold pressing, thereby achieving a higher compacted density and further improving the energy density and cycle performance of the electrochemical device.

In some embodiments, the specific surface area of the negative active material may be 1 m²/g to 30 m²/g. For example, the specific surface area of the negative active material may be 1 m²/g, 2 m²/g, 3 m²/g, 4 m²/g, 5 m²/g, 6 m²/g, 7 m²/g, 8 m²/g, 9 m²/g, 10 m²/g, 15 m²/g, 20 m²/g, 30 m²/g, or a value falling within a range formed by any two thereof. When the specific surface area of the negative active material falls within the above appropriate range, the specific surface area of the negative active material particles is made to be appropriate, and the area of the SEI film formed on the surface of the negative electrode plate is made to be appropriate, thereby reducing the consumption of irreversible lithium in the first-cycle charging process. Therefore, the hard carbon material of this application endows the electrochemical device with good kinetic performance and a high energy density.

In some embodiments, the compacted density of the negative active material layer may be 1.0 g/cm$^3$ to 1.7 g/cm$^3$. For example, the compacted density of the negative active material layer may be 1.0 g/cm$^3$, 1.1 g/cm$^3$, 1.2 g/cm$^3$, 1.3 g/cm$^3$, 1.4 g/cm$^3$, 1.5 g/cm$^3$, 1.6 g/cm$^3$, 1.7 g/cm$^3$, or a value falling within a range formed by any two thereof. Optionally, the compacted density of the negative active material layer may be 1.3 g/cm$^3$ to 1.7 g/cm$^3$. The negative active material layer of this application includes hard carbon particles of an appropriate aspect ratio. Therefore, the negative active material particles in the negative active material layer are stacked more compactly, thereby achieving a high compacted density, increasing the content of the negative active material per unit volume, and in turn, increasing the energy density of the electrochemical device.

In some embodiments, the porosity of the negative active material layer may be 10% to 40%. For example, the porosity of the negative active material layer may be 10%, 15%, 20%, 25%, 30%, 35%, 40%, or a value falling within a range formed by any two thereof.

Optionally, the porosity of the negative active material layer may be 15% to 25%.

Without intending to be limited by any theory or explanation, in contrast to the hard carbon material of a conventional morphology, more face-to-face contacts exist between the particles of the lamellar hard carbon active material. The more compact stacking makes the porosity of the negative active material layer lower. The porosity of the negative active material layer falls within the above appropriate range, thereby not only reducing the internal resistance of the negative electrode plate, but also ensuring high wettability of the negative electrode plate by the electrolyte solution, and in turn, improving the kinetic performance of the electrochemical device.

In some embodiments, the film resistance of the negative electrode plate may be 2 mΩ to 50 mΩ. For example, the film resistance of the negative electrode plate may be 2 mΩ, 5 mΩ, 8 mΩ, 10 mΩ, 15 mΩ, 20 mΩ, 25 mΩ, 30 mΩ, 35 mΩ, 40 mΩ, 45 mΩ, 50 mΩ, or a value falling within a range formed by any two thereof.

When falling within the above appropriate range, the film resistance of the negative electrode plate can ensure that the ohmic polarization of the electrochemical device is low, thereby reducing the heat generation during the charge and discharge of the electrochemical device, and in turn, improving the long-term cycle performance and safety performance of the electrochemical device.

The hard carbon particles of this application may be obtained in diverse ways. As an example, the hard carbon particles may be prepared by a template method through the following steps: mixing a lamellar inorganic template, a pore-forming agent, and resin to obtain a mixture; curing the mixture at a pressure of 0T to 5T and at a temperature of 25 °C to 200 °C for 0.1 h to 120 h; pyrolyzing the cured mixture at 700 °C to 1300 °C for 2 hours; crushing the mixture into particles and sieving the particles, and then treating the particles with an acid or alkaline solution to remove the template to obtain hard carbon particles. The lamellar inorganic template includes, but is not limited to, montmorillonite, mica, two-dimensional silicon, and lamellar silicon dioxide. The pore-forming agent includes, but is not limited to, magnesium oxide, magnesium chloride, magnesium gluconate, zinc oxide, zinc chloride, zinc gluconate, zinc stearate, zinc borate, iron oxide, iron chloride, glucose, and sucrose. The resin includes, but is not limited to, phenolic resin, furan resin, epoxy resin, polyester resin, bismaleimide, thermosetting polyimide, and cyanate ester. The mixing method may be powder mixing or solution mixing. When the mixing method is solution mixing, the choice of a solvent depends on the resin and the pore-forming agent. The solvent may include, but is not limited to, deionized water, methanol, ethanol, acetone, dichloromethane, benzene, toluene, ethyl acetate, or tetrahydrofuran. After the solution is mixed and before the solution is cured, the solvent may be removed or not. As a specific example, the hard carbon particles may be prepared by the following steps: dissolving 100 g of thermosetting phenolic resin completely in 200 mL of ethanol, and then adding 100 g of micron-scale lamellar silicon dioxide; and stirring the mixture for 24 hours in an open environment to volatilize the ethanol to obtain a viscous mixture; subsequently, introducing the viscous mixture into a molding plate, and setting the molding pressure to 0.5 T, setting the molding temperature to 200 °C, and setting the molding time to 1 h, and obtaining a precursor material after completion of the molding; placing the precursor material into a tube furnace, increasing the temperature to 1100 °C at a heating rate of 3 °C/min in an argon atmosphere, and keeping the temperature for 2 h; pyrolyzing the precursor to obtain pyrolytic carbon, and then crushing the pyrolytic carbon into particles and sieving the particles; subsequently, putting the pyrolytic carbon into 1 L of 2 mol/L sodium hydroxide solution, stirring for 24 h, and then suction-filtering the particles; and repeating the step twice to ensure that the lamellar silicon dioxide template is completely removed, so as to finally obtain a lamellar hard carbon material.

The negative current collector of the negative electrode plate is not particularly limited in this application. The negative current collector may be made of a metal foil or a porous metal sheet, for example, a foil or porous plate made of metal such as copper, nickel, titanium, or iron, or an alloy thereof. As an example, the negative current collector is a copper foil.

In some embodiments, the negative current collector includes two sides opposite to each other in a thickness direction of the current collector. The negative active material layer may be disposed on one side or both sides of the negative current collector. For example, the negative current collector includes two sides opposite to each other in the thickness direction of the current collector. The negative active material layer is disposed on one or both of the two opposite sides of the negative current collector.

In some embodiments, the negative active material layer does not exclude other negative active materials different from the hard carbon. The specific type of other negative active materials is not particularly limited, and may be selected as required. As an example, other negative active materials include, but are not limited to, at least one of soft carbon, silicon, a silicon-carbon composite, SiO, a Li-Sn alloy, a Li-Sn-O alloy, Sn, SnO, $SnO_2$, spinel-structured $Li_4Ti_5O_{12}$, or a Li-Al alloy.

In some embodiments, the negative active material layer further optionally includes a binder. The binder may be at least one selected from: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, or nylon.

In some embodiments, the negative active material layer further optionally includes a conductive agent. The conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some embodiments, the negative active material layer further optionally includes other agents, such as a thickener (for example, sodium carboxymethyl cellulose (CMC-Na)).

The negative electrode plate in this application may be prepared by a conventional method in this field. For example, a method for preparing the negative electrode plate includes: dispersing hard carbon and optionally other negative active materials, a conductive carbon, a binder, and a thickener in a solvent such as N-methyl-pyrrolidone (NMP) or deionized water to form a homogeneous negative electrode slurry, coating a negative current collector with the negative electrode slurry, and performing steps such as drying and cold pressing to obtain a negative electrode plate.

It is hereby noted that the parameters of the negative active material layer described herein mean the parameters of a negative active material layer on a single side of the negative current collector. When the negative active material layer is disposed on both sides of the negative current collector, the parameter settings are considered to fall within the protection scope of this application as long as the parameters of the negative active material layer on any one side of the negative current collector satisfy the parameter ranges specified herein.

In addition, the negative electrode plate according to this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer. In some other embodiments, the negative electrode plate according to this application further includes a protection layer overlaying the surface of the negative active material layer.

In this application, the aspect ratio of the hard carbon particles may be determined by using a method and instrument known in the art. An exemplary method for determining the aspect ratio is: bonding a negative electrode plate, which is cut into a specified size, onto a silicon wafer carrier by using a conductive adhesive; polishing a cross-section of the negative electrode plate through argon ion polishing to obtain a test piece; analyzing the morphology structure and element distribution of the polished cross-section by using a scanning electron microscope (SEM); picking out the image of the hard carbon particles by using image processing software; determining the value of the major diameter of each hard carbon particle in the cross-section and a maximum thickness in a direction perpendicular to the major diameter, so as to obtain the aspect ratio of each hard carbon particle.

In this application, the XRD pattern may be obtained using a method and instrument known in the art. For example, the XRD pattern may be obtained through an XRD test by using a Bruker D8 ADVANCE X-ray powder diffractometer. In the XRD test, the radiation source is a Cu K$\alpha$ target, and the test parameters may be set as follows: the X-ray tube voltage is set to 40 kV, the X-ray tube current is set to 40 mA, the scanning step size is set to 0.00836°/min, the scanning duration of each scanning step size is 0.3 s, and the 2θ range is 5° to 80°.

In this application, the particle sizes $D_{v10}$, $D_{v50}$, and $D_{v99}$ of the negative active material bear the meanings well known in the art, and may be measured by a method and instrument known in the art. For example, the particle size may be measured by using a laser particle size analyzer (such as Mastersizer 2000E manufactured by Britain-based Malvern Instruments Ltd.) by reference to the GB/T 19077-2016 particle size distribution laser diffraction method.

In this application, the specific surface area of the negative active material bears the meaning well known in the art, and may be determined by a method known in the art. For example, the specific surface area of the negative active material is determined by a nitrogen adsorption/desorption method with a specific surface area analyzer (such as Tristar II 3020M).

In this application, the compacted density of the negative active material layer bears a meaning well known in the art, and may be determined by a method known in the art. An exemplary method for measuring the compacted density is: using a die-cutting machine to cut out a plurality of discs fully coated with a slurry and a plurality of discs uncoated with the slurry, where the area of each disc is S; weighing the discs separately to determine an average mass $W_2$ of fully coated discs and an average mass $W_1$ of uncoated discs; measuring the thickness of the discs separately to obtain an average thickness $T_2$ of fully coated discs and an average thickness $T_1$ of uncoated discs; and calculating the compacted density of the negative electrode plate as: compacted density = $(W_2 - W_1)/(T_2 - T_1)/S$.

In this application, the porosity of the negative active material layer bears a meaning well known in the art, and may be determined by a method known in the art. An exemplary method for determining the porosity is: die-cutting a negative electrode plate coated with a negative active material into disc-shaped test pieces, where the volume of the negative active material layer in each test piece depends on the area and thickness of the disc; and determining the porosity of the negative active material layer with reference to the standard GB/T24586-2009 *Iron ores-Determination of Apparent Density, True Density and Porosity.*

In this application, the film resistance of the negative electrode plate bears the meaning well known in the art, and may be determined by a method known in the art. An exemplary method for determining the film resistance is: cutting the negative electrode plate into test pieces of 60 mm × 80 mm in size, and measuring the resistance of the test pieces by use of a BER1100 multifunction sheet resistance meter to obtain a film resistance of the negative electrode plate.

It is hereby noted that the parameters for the negative active material layer or the negative active material particles may be tested by sampling during preparation of the lithium-ion batteries, or may be tested by sampling the prepared lithium-ion batteries.

As an example, when the specimen is taken from a prepared lithium-ion battery, the sampling may be performed according to the following steps S10 to S30:

S10. Discharging the lithium-ion battery (for safety reasons, the battery is generally caused to be in a fully discharged state); disassembling the battery and taking out a negative electrode plate; soaking the negative electrode plate in dimethyl carbonate (DMC) for a period (for example, 2 to 10 hours); and then taking out the negative electrode plate, drying the negative electrode plate at a specified temperature for a specified time (for example, at 60 °C for 4 hours), and taking out the dried negative electrode plate. At this time, specimens may be taken from the dried negative electrode plate to test various relevant parameters of the negative active material of this application.

S20. Baking, at a specified temperature for a specified time (for example, at 400 °C for 2 hours), the negative electrode plate dried in step S10; selecting a region on the baked negative electrode plate randomly, and taking specimens of the negative active material (for example, by scraping powder with a scraper).

S30. Sieving the negative active material collected in step S20 (for example, through a 200-mesh sieve) to finally obtain specimens available for testing the parameters of the negative active material of this application.

**Electrochemical device**

A second aspect of this application provides an electrochemical device. The electrochemical device includes any device in which an electrochemical reaction occurs to implement conversion between chemical energy and electrical energy. Specific examples of the electrochemical device include but are not limited to a lithium-ion battery or a sodium-ion battery.

In some embodiments, the electrochemical device according to this application includes a positive electrode plate, a negative electrode plate, a separator, and an electrolyte solution.

In some embodiments, the positive electrode plate, the negative electrode plate, and the separator may be made into an electrode assembly by winding or stacking.

The electrochemical device according to this application further includes an outer package configured to package the electrode assembly and the electrolyte solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

**[Negative electrode plate]**

The negative electrode plate used in the electrochemical device according to this application is the negative electrode plate according to the first aspect of this application.

**[Positive electrode plate]**

The material, composition, and manufacturing method of the positive electrode plate used in the electrochemical device according to this application may include any technology known in the prior art.

The positive electrode plate includes a positive current collector and a positive active material layer disposed on at least one surface of the positive current collector and containing a positive active material. As an example, the positive current collector includes two surfaces opposite to each other in a thickness direction of the current collector. The positive active material layer is disposed on one or both of the two opposite surfaces of the positive current collector.

In some embodiments, the positive active material layer includes a positive active material. The specific type of the positive active material is not particularly limited, and may be selected as required. As an example, the positive active material may include one or more of lithium transition metal oxide, olivine-structured lithium-containing phosphate, or a modified compound thereof. In the electrochemical device according to this application, the modified compound of each positive active material described above may be formed by modifying the positive active material, for example, by doping, surface coating, or both doping and surface coating.

As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive active material layer further optionally includes a binder. As an example, the conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some embodiments, the positive current collector may be a metal foil or a composite current collector. As an example of the metal foil, the positive current collector may be an aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

The positive electrode plate in this application may be prepared by a conventional method in this field. For example, the positive active material layer is typically formed by coating a positive current collector with a positive electrode slurry and then performing drying and cold calendering. The positive electrode slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In other embodiments, the positive electrode plate according to this application further includes a protection layer overlaying the surface of the positive active material layer.


[Electrolyte solution]


The electrolyte solution serves to conduct active ions between the positive electrode plate and the negative electrode plate. The electrolyte solution for use in the electrochemical device of this application may be an electrolyte solution known in the prior art.

In some embodiments, the electrolyte solution includes an organic solvent, a lithium salt, and optionally a binder. The types of the organic solvent, the lithium salt, and the additive are not particularly limited, and may be selected according to actual needs.

In some embodiments, as an example, the lithium salt includes but is not limited to at least one of lithium hexafluorophosphate ($LiPF_6$), (lithium tetrafluoroborate ($LiBF_4$), lithium perchlorate ($LiClO_4$), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluorophosphate ($LiPO2F_2$), lithium difluoro(bisox-

alato) phosphate (LiDFOP), and lithium tetrafluoro(oxalato) phosphate (LiTFOP). Of the foregoing lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl) ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As an example, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolyte solution may be prepared by a conventional method in this field. For example, the electrolyte solution may be obtained by mixing well an organic solvent, a lithium salt, and an optional additive. The order of adding the ingredients is not particularly limited. For example, the lithium salt and the optional additive may be added together to the organic solvent and mixed well to obtain the electrolyte solution; or, the lithium salt may be added to the organic solvent, and then the optional additive is added into the organic solvent and mixed well to obtain the electrolyte solution.

**[Separator]**

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. Optionally, the material of the separator may include polyethylene and/or polypropylene. The separator may be a single-layer film or a multilayer composite film. When the separator is a multilayer composite film, materials of different layers may be identical or different. In some embodiments, the separator may be coated with a ceramic coating or a metal oxide coating.

Although, in the above description of some embodiments related to the negative electrode plate, the beneficial effects that can be achieved by the negative electrode plate of this application are mainly described by using a lithium-ion battery as a specific example, a person skilled in the art easily understands that the negative active material in the negative electrode plate of this application achieves a high compacted density and an appropriate porosity. Therefore, when applied to other types of electrochemical devices, the negative electrode plate can still achieve corresponding beneficial effects.

**Electrical device**

A third aspect of this application provides an electrical device. The electrical device includes the electrochemical device disclosed in the second aspect of this application.

The electrical device of this application is not particularly limited herein, and may be any electrical device known in the prior art. In some embodiments, the electrical device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

**Embodiments**

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

## Embodiments 1 to 21

### Preparing a negative electrode plate

Dissolving a negative active material, a binder styrene butadiene rubber, and sodium carboxymethyl cellulose (CMC-Na) in deionized water at a mass ratio of 97: 1.5: 1.5 to obtain a negative electrode slurry in which the solid content is 40 wt%. Applying the negative electrode slurry onto both sides of the negative current collector, where the negative current collector is a 6 $\mu$m-thick copper foil coated with the slurry that is 50 $\mu$m thick on a single side. Drying the negative current collector at 85 °C, performing cold-pressing, cutting, and slitting, and drying the resultant product at 120 °C for 12 hours in a vacuum environment to obtain a negative electrode plate. Based on the mass of the negative active material, the mass percent $w_1$% of the lamellar hard carbon, the mass percent $w_2$% of the MCMB, a, b, c, d, $D_{v10}$, $D_{v50}$, and $D_{v99}$ of the negative active material, the specific surface area of the negative active material, the compacted density of the negative active material layer, the porosity of the negative active material layer, and the film resistance of the negative electrode plate are shown in Table 1, Table 2, and Table 3 separately. The negative active material in Embodiments 1 to 8 is 95 wt% hard carbon and 5 wt% MCMB; the negative active material in Embodiments 9 to 16 is the same as that in Embodiment 1 and has the same aspect ratio distribution as the hard carbon in Embodiment 1; and the negative active material in Embodiments 17 to 21 has the same aspect ratio distribution as the hard carbon in Embodiment 1.

### Preparing a positive electrode plate

Mixing lithium cobalt oxide as a positive active material, carbon black as a conductive agent, and PVDF as a binder at a mass ratio of 97: 1.4: 1.6, adding an appropriate amount of NMP solvent, and stirring the mixture well to obtain a positive electrode slurry in which the solid content is 72 wt%. Coating both sides of a positive current collector aluminum foil with the positive electrode slurry evenly for a thickness of 80 $\mu$m on each side. Oven-drying the aluminum foil at 85 °C, and then performing cold-pressing, cutting, and slitting, and drying the resultant product in an 85 °C vacuum environment for 4 hours to obtain a positive electrode plate.

### Preparing an electrolyte solution

Mixing ethylene carbonate (EC), propylene carbonate (PC), and diethyl carbonate (DEC) in a dry argon atmosphere glovebox at a mass ratio of EC: PC: DEC = 1: 1: 1, stirring well, and then adding a lithium salt $LiPF_6$. Stirring well to obtain an electrolyte solution, which the mass percent of $LiPF_6$ is 12.5% based on the mass of the electrolyte solution. Adding 2 wt% 1,3-propane sultone, 2 wt% fluoroethylene carbonate, and 2 wt% succinonitrile into the electrolyte solution.

### Preparing a separator

Using a 7 $\mu$m-thick polyethylene (PE) film as a separator.

### Preparing a lithium-ion battery

Stacking the positive electrode plate, the separator, and the negative electrode plate sequentially, and winding the stacked structure to obtain an electrode assembly. Placing the electrode assembly into an outer package, dehydrating at 80 °C, injecting the electrolyte solution, and performing steps such as sealing, standing, chemical formation, degassing, and shaping to obtain a lithium-ion battery.

## Comparative Embodiments 1 to 4

Preparing the negative electrode plate, the positive electrode plate, the electrolyte solution, the separator, and the lithium-ion battery in Comparative Embodiments 1 to 5 by adjusting the type of the negative active material with reference to the preparation processes of the negative electrode plate, the positive electrode plate, the electrolyte solution, the separator, and the lithium-ion battery in Embodiments 1 to 21.

The negative active material in Comparative Embodiment 1 is MCMB; the negative active material in Comparative Embodiment 2 is flake graphite; the negative active material in Comparative Embodiment 3 is 95 wt% hard carbon of conventional morphology and 5 wt% MCMB; and the negative active material in Comparative Embodiment 4 is 95 wt% microspherical hard carbon particles and 5 wt% MCMB.

**Comparative Embodiments 5 to 6**

Preparing the negative electrode plate, the positive electrode plate, the electrolyte solution, the separator, and the lithium-ion battery in Comparative Embodiments 5 and 6 by adjusting the values of a, b, c, and d of the hard carbon material according to Table 1 with reference to the preparation processes of the negative electrode plate, the positive electrode plate, the electrolyte solution, the separator, and the lithium-ion battery in Embodiments 1 to 21.

**Test Part**

**Testing the negative electrode plate**

(1) Determining the aspect ratio of the hard carbon particles

Test instrument: Scanning electron microscope JSM-6360LV and an attached energy-dispersive X-ray spectrometer (EDS)

Taking a fully discharged lithium-ion battery, disassembling the battery, and taking out the negative electrode plate; soaking the negative electrode plate in DMC for 20 minutes, cleaning the negative electrode plate with DMC and acetone successively, putting the cleaned negative electrode plate into an oven. Drying the electrode plate at 80 °C. Cutting the dried negative electrode plate into negative electrode plate test pieces with a width of 0.5 cm. Adhering a test piece onto a silicon wafer carrier by using a conductive adhesive with a width of 1 cm. Polishing a cross-section of the negative electrode plate at one end through argon ion polishing (operating parameters: accelerating voltage 8 kV, polishing duration 4 h) to obtain a test piece; analyzing the morphology structure and element distribution of the polished cross-section by using a scanning electron microscope; picking out the image of the hard carbon particles by using image processing software (Multiphase); determining the value of the major diameter of each hard carbon particle in the cross-section and a maximum thickness in a direction perpendicular to the major diameter, so as to obtain the aspect ratio of each hard carbon particle. For the negative electrode plate in each embodiment or comparative embodiment, 10 SEM images are processed (referring to FIG. 2) to statistically obtain the values of a, b, c, and d.

(2) XRD test for the negative active material

Test instrument: Bruker D8 ADVANCE X-ray powder diffractometer

Disassembling a fully discharged lithium-ion battery, and taking out a negative electrode plate. Cleaning and drying the negative electrode plate, and treating the negative active material layer with a scraper to obtain negative active material layer powder. Placing the negative active material layer powder into a tube furnace, and keeping the temperature at 400 °C in an argon atmosphere for 4 hours to remove the binder adhering to the surface of the negative active material layer powder, thereby obtaining the negative active material powder. Using an X-ray powder diffractometer to test the negative active material powder to obtain an XRD pattern of the negative active material. In the XRD test, the radiation source is a Cu K$\alpha$ target, and the test parameters may be set as follows: the X-ray tube voltage is set to 40 kV, the X-ray tube current is set to 40 mA, the scanning step size is set to 0.00836°/min, the scanning duration of each scanning step size is 0.3 s, and the 2$\theta$ range is 5° to 80°.

(3) Measuring the particle size of the negative active material

Test instrument: Bruker D8 Advance X-ray powder diffractometer

Obtaining negative active material powder with reference to the steps in the XRD test of the negative active material, dispersing the negative active material powder in ethanol, and performing ultrasonication for 30 minutes to obtain an ethanol dispersion of the negative active material. Adding the ethanol dispersion of the negative active material into a Malvern particle size tester to test the $D_{v10}$, $D_{v50}$, and $D_{v99}$ of the negative active material particles.

(4) Measuring the specific surface area of the negative active material

Test instrument: specific surface area analyzer Tristar II 3020M

Obtaining the negative active material powder with reference to the steps in the XRD test of the negative active material, putting the negative active material powder into a vacuum oven for drying; and measuring the specific surface area of the negative active material by using a specific surface area analyzer.

(5) Testing the compacted density of the negative active material layer

Disassembling a fully discharged lithium-ion battery, taking out a negative electrode plate, cleaning and oven-drying the electrode plate, and measuring the area S of the negative active material layer on a single side of the current collector, the mass $W_1$ of the negative electrode plate, and the thickness $T_1$ of the negative electrode plate; washing away the negative active material layer with a solvent, oven-drying the negative current collector, and measuring the mass $W_2$ of the negative current collector and the thickness $T_2$ of the negative current collector. Calculating the compacted density of the negative active material layer according to the following Formula 1 to Formula 3:

$$W_0 = (W_1 - W_2)/2 \quad \text{Formula 1}$$

$$T_0 = (T_1 - T_2)/2 \quad \text{Formula 2}$$

$$\text{Compacted density} = W_0/(T_0 \times S) \quad \text{Formula 3}$$

In the formulas above, $W_0$ is the mass of the negative active material layer on a single side of the current collector, and $T_0$ is the thickness of the negative active material layer on a single side of the current collector.

(6) Testing the porosity of the negative active material layer

Test instrument: True density tester (AccuPyc II 1340)

Die-cutting a negative electrode plate coated with a negative active material into disc-shaped test pieces, where the volume of the negative active material layer in each test piece is approximately 0.35 cm$^3$; and determining the porosity of the negative active material layer with reference to the standard GB/T24586-2009 *Iron ores-Determination of Apparent Density, True Density and Porosity.*

(7) Testing the gram capacity of the negative active material

Fitting a negative electrode plate and a positive electrode plate lithium sheet together to assemble a button battery; discharging the button battery at a current of 0.05 C until the voltage reaches 5.0 mV, and then discharging the battery at a current of 50 μA until the voltage reaches 5.0 mV, and then discharging the battery at a current of 10 μA until the voltage reaches 5.0 mV. Charging the battery at a current of 0.1C until the voltage reaches 2.0 V. Recording a first-time charge capacity of the button battery at this time. Calculating the gram capacity of the negative active material as: gram capacity = first-cycle charge capacity (mAh)/mass of the negative active material (g).

(8) Testing the pore size distribution of the negative active material

Test instrument: ASAP2460-physical adsorption analyzer. Test steps: Obtaining negative active material powder with reference to the steps in the XRD test of negative active material; placing an oven-dried and degassed specimen into liquid nitrogen, adjusting test pressure to different values, measuring the adsorption amount of nitrogen, and plotting adsorption-desorption isotherms. Determining the shape of the pores based on the shape of the hysteresis loop, calculating the pore distribution and pore volume based on different pore models. Using a BJH model to fit a pore size distribution curve of mesopores and macropores, and using a DFT model to fit a pore size distribution curve of micropores.

**Testing the lithium-ion battery**

(1) Testing the energy density of a lithium-ion battery

For each embodiment or comparative embodiment, taking 5 lithium-ion batteries for measuring the energy density. The specific test steps are as follows:

First, charging and discharging a lithium-ion battery in a first cycle in a 25 °C environment, charging the battery at a constant current of 0.5C until the voltage reaches an upper-limit voltage of 4.48 V, and then charging the battery at a constant voltage. Subsequently, discharging the battery at a constant current of 0.2C until the voltage reaches a cut-off voltage (3 V). Calculating a percentage A% of the energy density $M_i$ of the lithium-ion battery in each embodiment or each comparative embodiment in relation to the energy density $M_1$ in Comparative Embodiment 1, and using the calculation result as an energy density parameter A of the lithium-ion battery in each embodiment and each comparative embodiment, where $A = M_i/M_1$.

(2) Testing the rate performance of the lithium-ion battery

For each embodiment or each comparative embodiment, taking 5 lithium-ion batteries for testing the C-rate performance. The specific test steps are as follows: leaving a lithium-ion battery to stand in a 25 °C environment for 1 hour, charging the battery at a constant current (CC) 1C rate until the voltage reaches 4.48 V, and then charging the battery at a constant voltage (CV) until the current is lower than 0.05C; leaving the battery to stand for 5 minutes; and then discharging the battery at a current of 0.2C until the voltage drops to 3 V, and leaving the battery to stand for 5 minutes, thereby completing 1 charge-discharge cycle. Recording the charge capacity (average) of the CC stage and the CV stage separately, and calculating the proportion of the CC charge capacity. Adjusting the current to 0.2C, 0.5C, 1C, 2C, and 3C successively, and performing the 2nd to 6th charge-discharge cycles in the same way as the 1st charge-discharge cycle. Calculating, by using Formula 4, the proportion of the CC charge capacity of the battery charged at a rate of 3C.

Proportion of the CC charge capacity = [CC charge capacity/(CC charge capacity + CV charge capacity)] $\times$ 100%            Formula 4

(3) Testing the cycle performance of the lithium-ion battery

For each embodiment or each comparative embodiment, taking 5 lithium-ion batteries for testing the cycle performance. The specific test steps are as follows:

Charging a lithium-ion battery at a 1C rate at 25 °C until the voltage reaches 4.48 V, and then charging the battery at a constant voltage until the current reaches a cut-off current, and then discharging the battery at a 1C rate until the voltage drops to 3 V, thereby completing one charge-discharge cycle. Recording the first-cycle charge capacity, first-cycle discharge capacity, and the thickness of the fully charged lithium-ion battery in a first cycle. Subsequently, repeating the charge-discharge cycles, and recording the discharge capacity and thickness of the fully charged lithium-ion battery at the end of the 400th cycle.

First-cycle Coulombic efficiency (%) = (first-cycle discharge capacity/first-cycle charge capacity) $\times$ 100%.

Proportion of first-cycle irreversible capacity (%) = [(first-cycle charge capacity - first-cycle discharge capacity)/first-cycle charge capacity] $\times$ 100%;

Capacity retention rate (%) = (400th-cycle discharge capacity/first-cycle discharge capacity) $\times$ 100%;

and

Thickness expansion rate (%) = [(thickness of the fully charged lithium-ion battery at the end of the 400th cycle - thickness of the fully charged lithium-ion battery at the end of the first cycle)/thickness of the fully charged lithium-ion battery at the end of the first cycle] $\times$ 100%.

(4) Testing the self-discharge rate of the lithium-ion battery

For each embodiment or each comparative embodiment, taking 5 lithium-ion batteries for testing the self-discharge rate. The specific test steps are as follows:

Taking a lithium-ion battery in an 80% state of charge (SOC), measuring the initial open-circuit voltage of the lithium-ion battery, denoted as $V_1$; leaving the battery to stand at 25 °C for 48 hours, and then measuring the open-circuit voltage of the lithium-ion battery again, denoted as $V_2$.

Calculating the self-discharge rate of the lithium-ion battery as: self-discharge rate = $(V_1 - V_2)/48$.

(5) Testing the direct-current resistance (DCR) of the lithium-ion battery

Charging a lithium-ion battery at a current of 0.5C at 25 °C until the voltage reaches 4.4 V, and then charging the battery at a constant voltage until the current drops to 0.05C. Subsequently, discharging the battery at a current of 0.1C for 2 hours, and then leaving the battery to stand for 1 hour. Afterward, discharging the battery at a current of 0.1C ($I_1$) for 10 seconds, and recording a discharge voltage $V_3$ at the last 1 second, and then discharging the battery at a current of 1C ($I_2$) for 1 second, and recording the discharge voltage $V_4$ at the last 1 second. Calculating the direct-current resistance as: DCR = $(V_3 - V_4)/(I_2 - I_1)$.

The specific test results in the embodiments and comparative embodiments are shown in Table 1 to Table 3.

### Table 1 (To be Continued)

| Serial number | Type of first negative active material | Aspect ratio | | | | Pore volume (g/cc) (pore size < 2 mm) | Pore volume (g/cc) (pore size ≥ 2 mm) | Specific surface area (m²/g) |
|---|---|---|---|---|---|---|---|---|
| | | b | c | a | d | | | |
| Embodiment 1 | Lamellar hard carbon | 20 | 9.5 | 70 | 0.5 | 2.8 | 0 | 7.3 |
| Embodiment 2 | | 30 | 9.5 | 60 | 0.5 | 2.8 | 0 | 6.7 |
| Embodiment 3 | | 40 | 9.5 | 50 | 0.5 | 2.8 | 0 | 6.4 |
| Embodiment 4 | | 50 | 9.5 | 40 | 0.5 | 2.8 | 0 | 5.6 |
| Embodiment 5 | | 60 | 9.5 | 30 | 0.5 | 2.8 | 0 | 4.8 |
| Embodiment 6 | | 30 | 9.5 | 70 | 0.5 | 2.8 | 0 | 7.4 |
| Embodiment 7 | | 39 | 0.5 | 60 | 0.5 | 2.8 | 0 | 7.3 |
| Embodiment 8 | | 49 | 0.5 | 50 | 0.5 | 2.8 | 0 | 6.6 |
| Comparative Embodiment 1 | Mesocarbon microbeads | 1 | 99 | 0 | 0 | 0.1 | 0 | 4.3 |
| Comparative Embodiment 2 | Flake graphite | 52 | 14 | 26 | 8 | 0.1 | 0 | 5.6 |
| Comparative Embodiment 3 | Conventional hard carbon | 24 | 69 | 4.5 | 0.5 | 3.6 | 1.6 | 4.9 |
| Comparative Embodiment 4 | Microbead hard carbon | 1 | 99 | 0 | 0 | 4.4 | 2.1 | 5.6 |
| Comparative Embodiment 5 | Lamellar hard carbon | 10 | 10 | 30 | 50 | 2.8 | 0 | 20.0 |
| Comparative Embodiment 6 | | 40 | 40 | 15 | 5 | 2.8 | 0 | 3.0 |

### Table 1 (Continued)

| Serial number | Compacted density (g/cm³) | Porosity (%) | Gram capacity (mAh/g) | Self-discharge rate (mV/h) | First-cycle Coulombic efficiency (%) | DCR (mΩ) | CC-stage capacity percentage (3C) (%) | A |
|---|---|---|---|---|---|---|---|---|
| Embodiment 1 | 1.30 | 23 | 510 | 0.04 | 78 | 43 | 89 | 101 |
| Embodiment 2 | 1.31 | 23 | 510 | 0.04 | 78 | 44 | 88 | 101 |
| Embodiment 3 | 1.33 | 18 | 510 | 0.04 | 79 | 47 | 87 | 102 |

(continued)

| Serial number | Compacted density (g/cm$^3$) | Porosity (%) | Gram capacity (mAh/g) | Self-discharge rate (mV/h) | First-cycle Coulombic efficiency (%) | DCR (mΩ) | CC-stage capacity percentage (3C) (%) | A |
|---|---|---|---|---|---|---|---|---|
| Embodiment 4 | 1.30 | 23 | 510 | 0.04 | 79 | 46 | 89 | 102 |
| Embodiment 5 | 1.33 | 19 | 510 | 0.05 | 80 | 55 | 86 | 103 |
| Embodiment 6 | 1.32 | 19 | 510 | 0.05 | 77 | 55 | 89 | 101 |
| Embodiment 7 | 1.30 | 24 | 510 | 0.05 | 76 | 54 | 88 | 101 |
| Embodiment 8 | 1.28 | 25 | 510 | 0.04 | 77 | 51 | 90 | 101 |
| Comparative Embodiment 1 | 1.6 | 24 | 358 | 0.05 | 93 | 40 | 80 | 100 |
| Comparative Embodiment 2 | 1.65 | 17 | 350 | 0.03 | 92 | 38 | 75 | 98 |
| Comparative Embodiment 3 | 1.00 | 34 | 525 | 0.20 | 76 | 66 | 88 | 99 |
| Comparative Embodiment 4 | 1.05 | 35 | 500 | 0.15 | 75 | 60 | 89 | 99 |
| Comparative Embodiment 5 | 1.32 | 25 | 510 | 0.07 | 69 | 49 | 87 | 88 |
| Comparative Embodiment 6 | 1.09 | 29 | 510 | 0.13 | 78 | 71 | 90 | 94 |

**Table 2**

| Serial number | Particle size of negative active material (μm) | | | Specific surface area (m$^2$/g) | Proportion of first-cycle irreversible capacity (%) |
|---|---|---|---|---|---|
| | $D_{v10}$ | $D_{v50}$ | $D_{v99}$ | | |
| Embodiment 1 | 4 | 10 | 37 | 7.3 | 22 |
| Embodiment 9 | 1 | 7 | 33 | 10.1 | 28 |
| Embodiment 10 | 2 | 8 | 34 | 9.6 | 27 |
| Embodiment 11 | 3 | 8 | 35 | 8.5 | 25 |
| Embodiment 12 | 4 | 12 | 38 | 7.8 | 23 |
| Embodiment 13 | 5 | 14 | 40 | 6.5 | 21 |
| Embodiment 14 | 5.5 | 16 | 41 | 5.5 | 20 |
| Embodiment 15 | 8 | 24 | 56 | 2.7 | 17 |
| Embodiment 16 | 1 | 5 | 20 | 43.8 | 37 |

**Table 3**

| Serial number | $w_1$ (%) | $w_2$ (%) | Compacted density (g/cm$^3$) | Thickness expansion rate (%) | Capacity retention rate (%) | A |
|---|---|---|---|---|---|---|
| Embodiment 1 | 95 | 5 | 1.30 | 3.0 | 94 | 101 |
| Embodiment 17 | 90 | 10 | 1.34 | 3.5 | 93 | 103 |
| Embodiment 18 | 85 | 15 | 1.36 | 3.7 | 92 | 102 |
| Embodiment 19 | 80 | 20 | 1.40 | 3.9 | 91 | 101 |
| Embodiment 20 | 75 | 25 | 1.45 | 4.4 | 92 | 101 |
| Embodiment 21 | 50 | 50 | 1.50 | 7.0 | 88 | 99 |

As can be seen from Table 1, the negative active materials in Comparative Embodiments 1 and 5 are all spherical or quasi-spherical carbon material particles, and the aspect ratio distribution of the particles is relatively concentrated. When the materials are cold-pressed in a similar process, the compacted density of the hard carbon negative active materials is lower than the compacted density of graphitic negative active materials. In a case that the lamellar hard carbon in this application is employed, the hard carbon particles are more compactly stacked by being cold-pressed, the negative active material layer achieves a higher compacted density and lower porosity, and the lithium-ion battery achieves a relatively high self-discharge rate. This indicates that, after the lamellar hard carbon with an appropriate aspect ratio distribution is cold-pressed, the surface of the active material layer is flatter and smoother, and is not prone to damage the separator, thereby significantly decreasing the degree of internal physical micro-short circuits. In addition, the lamellar hard carbon particles can effectively shorten the transmission path of lithium ions through face-to-face contact, and increase the solid-phase transfer speed of lithium ions inside the active material, thereby reducing the internal resistance of the lithium -ion battery and improving the kinetic performance of the battery. Therefore, the fast-charge capability of the lithium -ion battery is effectively improved, and the lithium-ion battery achieves higher cycle performance and C-rate performance, and the energy density of the lithium-ion battery is further increased.

As can be seen from Embodiment 1 and Embodiments 9 to 16, when the particle size of the negative active material is relatively large, the first-cycle irreversible capacity of the lithium-ion battery increases, thereby impairing the cycle performance of the lithium-ion battery.

As can be seen from Embodiment 1 and Embodiments 17 to 21, when the mass percent of the graphite particles and the mass percent of the hard carbon particles are appropriate, both the hard carbon content and the compacted density of the negative electrode plate are relatively high, and the energy density of the corresponding lithium-ion battery is relatively higher. Because the hard carbon not only exhibits a low volume expansion rate in the process of delithiation and lithiation, but also can suppress the volume expansion of graphite during charging and discharging. In an embodiment with a higher mass percent of hard carbon, the corresponding lithium-ion battery exhibits a lower 400$^{th}$-cycle thickness expansion rate and a higher 400$^{th}$-cycle capacity retention rate.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1.  A negative electrode plate, comprising a negative current collector and a negative active material layer disposed on at least one side of the negative current collector; wherein the negative active material layer comprises a negative active material, the negative active material comprises hard carbon particles and graphite particles, the hard carbon particles have a lamellar structure; and, based on a quantity of the hard carbon particles, the hard carbon particles with an aspect ratio of 3 to 7 accounts for a%, and $30 \leq a \leq 70$.

2.  The negative electrode plate according to claim 1, wherein, based on the quantity of the hard carbon particles, the hard carbon particles with an aspect ratio of 2 to 3 account for b%, satisfying: $20 \leq b \leq 60$.

3.  The negative electrode plate according to claim 2, wherein the hard carbon particles satisfy: $a + b \geq 90$.

4.  The negative electrode plate according to claim 1, wherein, based on the quantity of the hard carbon particles, the hard carbon particles with an aspect ratio of 1 to 2 account for c%, and the hard carbon particles with an aspect ratio greater than 7 account for d%, satisfying: $0.1 \leq c \leq 10$, and $0.1 \leq d \leq 1$.

5. The negative electrode plate according to claim 1, wherein a mass of the hard carbon particles accounts for 85% to 99% of a mass of the negative active material.

6. The negative electrode plate according to claim 1, wherein an X-ray diffraction pattern of the negative active material comprises a first diffraction peak and a second diffraction peak, the first diffraction peak is located between 18° and 30°, and a full-width-at-half-maximum of the first diffraction peak is 4° to 12°; and a second diffraction peak is located between 26° and 27°, and a full-width-at-half-maximum of the second diffraction peak is 0.1° to 0.4°.

7. The negative electrode plate according to claim 1, wherein the hard carbon particles comprise micropores, and a volume of the micropores measured by a nitrogen and carbon dioxide adsorption-desorption method is greater than or equal to 0.25 cc/g.

8. The negative electrode plate according to claim 1, wherein the negative active material satisfies at least one of the following conditions:

   (1) a particle size of the negative active material satisfies $1 \mu m \leq D_{v10} \leq 5 \mu m$, $4 \mu m \leq D_{v50} \leq 18 \mu m$, and $D_{v99} \leq 43 \mu m$; or
   (2) a specific surface area of the negative active material is 1 $m^2/g$ to 30 $m^2/g$.

9. The negative electrode plate according to claim 1, wherein the negative active material layer satisfies at least one of the following conditions:

   (3) a compacted density of the negative active material layer is 1.0 $g/cm^3$ to 1.7 $g/cm^3$; or
   (4) a porosity of the negative active material layer is 10% to 40%.

10. The negative electrode plate according to any one of claims 1 to 9, wherein the negative electrode plate satisfies at least one of the following conditions:

    (5) based on the quantity of the hard carbon particles, the hard carbon particles with an aspect ratio of 3 to 7 account for a%, and $30 \leq a \leq 50$;
    (6) based on the quantity of the hard carbon particles, the hard carbon particles with an aspect ratio of 2 to 3 account for b%, and $20 \leq b \leq 50$;
    (7) based on the quantity of the hard carbon particles, the hard carbon particles with an aspect ratio of 3 to 7 account for a%, and the hard carbon particles with an aspect ratio of 2 to 3 account for b%, satisfying: $a + b \geq 95$; or
    (8) a volume of micropores of the hard carbon particles measured by a nitrogen and carbon dioxide adsorption-desorption method is 1 cc/g to 5 cc/g.

11. An electrochemical device, comprising the negative electrode plate according to any one of claims 1 to 10.

FIG. 1

FIG. 2

FIG. 3

## INTERNATIONAL SEARCH REPORT

| International application No. |
|---|
| **PCT/CN2022/100320** |

| A. | CLASSIFICATION OF SUBJECT MATTER |
|---|---|
| | H01M4/1393(2010.01)i;H01M4/583(2010.01)i |

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 负极, 阳极, 硬炭, 径厚比, 长径, 厚度, 比值, 数目, battery, negative electrode, anode, hard carbon, aspect ratio, long diameter, thickness, ratio, number

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111554903 A (NINGDE AMPEREX TECHNOLOGY LTD.) 18 August 2020 (2020-08-18)<br>description, paragraphs 24-87, and figures 1-4 | 1-11 |
| Y | JP H10241683 A (MITSUBISHI CABLE INDUSTRIES, LTD.) 11 September 1998 (1998-09-11)<br>description, paragraphs 4-29, and figure 1 | 1-11 |
| Y | CN 111554902 A (NINGDE AMPEREX TECHNOLOGY LTD.) 18 August 2020 (2020-08-18)<br>description, paragraphs 23-86, and figures 1-4 | 1-11 |
| Y | CN 101174683 A (BYD CO., LTD.) 07 May 2008 (2008-05-07)<br>description, page 3, second-to-last paragraph-page 7, paragraph 2 | 1-11 |
| Y | CN 109585781 A (SHENZHEN BAK POWER BATTERY CO., LTD.) 05 April 2019 (2019-04-05)<br>description, paragraphs 5-25 | 1-11 |
| A | CN 111584833 A (SK INNOVATION CO., LTD.) 25 August 2020 (2020-08-25)<br>entire document | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2023** | **20 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/100320**

| Patent document cited in search report | | | Publication date (day/month/year) | Patent family member(s) | | | Publication date (day/month/year) |
|---|---|---|---|---|---|---|---|
| CN | 111554903 | A | 18 August 2020 | WO | 2021226842 | A1 | 18 November 2021 |
| JP | H10241683 | A | 11 September 1998 | None | | | |
| CN | 111554902 | A | 18 August 2020 | WO | 2021226841 | A1 | 18 November 2021 |
| | | | | CN | 111554902 | B | 24 June 2022 |
| CN | 101174683 | A | 07 May 2008 | CN | 101174683 | B | 12 May 2010 |
| CN | 109585781 | A | 05 April 2019 | None | | | |
| CN | 111584833 | A | 25 August 2020 | US | 2022216458 | A1 | 07 July 2022 |
| | | | | US | 11563206 | B2 | 24 January 2023 |
| | | | | KR | 20200099872 | A | 25 August 2020 |
| | | | | US | 2020266422 | A1 | 20 August 2020 |
| | | | | US | 11322735 | B2 | 03 May 2022 |

Form PCT/ISA/210 (patent family annex) (July 2022)